# EUROPEAN PATENT SPECIFICATION

(11) **EP 0 426 040 B1**
(45) Date of publication and mention of the grant of the patent: **06.03.1996**
(21) Application number: 90120609.4
(22) Date of filing: 26.10.1990
(51) Int. Cl.: G02B 21/00, G02B 21/18

(54) **Microscopic spectrometer**
Mikroskopisches Spektrometer
Spectromètre microscopique

(30) Priority: 03.11.1989 JP 286893/89
(43) Date of publication of application: 08.05.1991
(73) Proprietor: HORIBA, LTD., Minami-ku Kyoto (JP)
(72) Inventor: Ukon, Juichiro, Ibaraki-City, Osaka (JP)
(74) Representative: TER MEER - MÜLLER - STEINMEISTER & PARTNER

(56) References cited:
- WO-A-88/06300
- DE-B- 1 813 499
- DE-B- 2 449 290
- US-A- 3 718 400
- US-A- 3 820 870

## Description

The present invention relates to a microscopic spectrometer.

### Description of the Prior Art

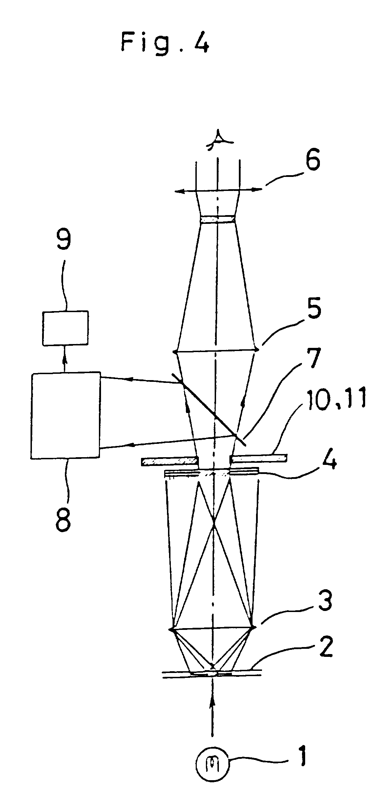

Fig. 4 shows a conventional microscopic spectrometer. Referring to Fig. 4, the light from a light source 1 is incident upon a sample 2 whereas the light, which has transmitted through said sample 2, is collected by means of an object lens 3 to form an enlarged image on an image surface 4. Further, the light from said image surface 4 is enlargedly focused into an image through a relay lens 5 and then the image surface 4 is observed by means of an eye piece 6.

On the other hand, in case a spectrometric measurement is carried out, the light is introduced into a spectrometrical measurement system 8 by disposing an optical patch-change over mirror 7 between the image surface 4 and said relay lens 5 in order to obtain a spectrum by means of said spectrometrical measurement system 8 and a display 9, whereby conducting an analysis.

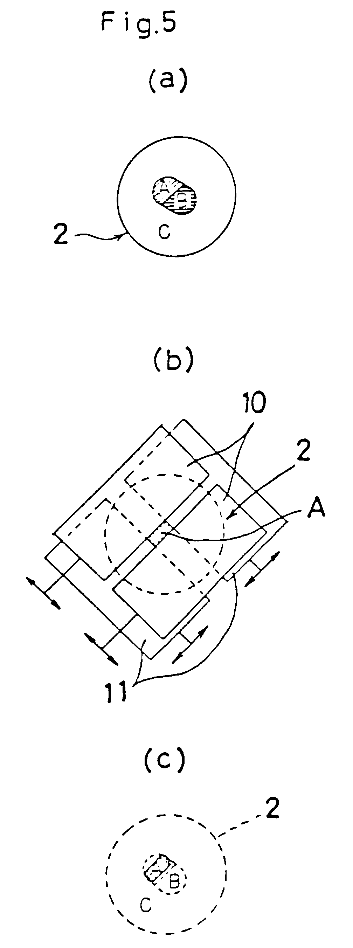

However, even in case a spectrum of merely a portion A to be determined in the sample 2 is to be measured, as shown for example in Fig. 5(a), the whole sample 2 is used as an object, so that a mixture spectrum of substances A, B and C is produced and not a spectrum of the substance A alone.

In order to solve this problem, an image surface 4 is provided with masks 10, 11 for masking beams from portions other than those to be measured to take a suitable spectrum, as shown in Fig. 4.

In short, as shown in Fig. 5(b), an image surface 4 is provided with masks 10, 11 for forming a rectangular slit. Respective sides of the masks 10, 11 are constructed in the form of knife edges and the length of the slit can be optionally changed in order to mask beams from substances B, C other than a substance A to be measured. Further, it is possible to change the length of the slit so as to obtain a maximum beam from said substance A, whereby conducting the measurement.

However, if an object to be measured is limited in the above described manner, merely the substance A can be observed through the masks 10, 11 but other substances B, C are masked, as shown in Fig. 5(c), so that it is impossible to reconfirm a positional relation of the substance A in the whole image of the sample 2 by the visual observation. It is therefore difficult to grasp the positional relation of the object to be measured through the masks 10, 11 if the object to be measured becomes minute or the whole image of the substance to be measured is complicated such as in case of a semiconductor chip or a cellular tissue of living body.

So, in order to reconfirm the positional relation of the substance to be measured it is necessary to remove the masks 10, 11 or to move the slit. Accordingly, in the remeasurement it is remarkably difficult to reproduce the positions of the masks 10, 11 and the length of the slit in high accuracy and thus the accuracy of measurement is lowered.

In a known microscopic spectrometer (US-A-3 718 400) the light from a light source is incident upon a sample after passing a spectroscope and the light which has been transmitted through said sample is focussed onto a light receiver by an objetiv lens and a relay lens for carrying out spectrometric measurement. The preamble of Claim 1 corresponds to US-A- 3 718 400.

A primary pin hole is disposed in the illuminating path and an image thereof is given on the sample by means of a condenser lens. An image of the primary pin hole is formed on a secondary pin hole which is disposed between the objective lens and the relay lens. In order to observe the centered condition of the pin holes several optical elements like lenses and mirrors can be inserted in the optical path for deflecting the same.

These optical elements have to be retracted from the optical path for spectrometric measurements.

Further, in a known photometric microscope (US-A-3 820 870) the optical path of the light behind the objective is divided into two branched paths by means of a first beam splitter. A diaphragm is disposed in one of these paths in order to provide a limited area of the object. Thus, only light from this limited area can reach a photometer. Rejoining means comprising a second and third beam splitter are provided in order to combine the two optical paths for observing the position of diaphragm relative to the object.

### SUMMARY OF THE INVENTION

The object underlying the present invention is to provide a microscope spectrometer capable of confirming a position of an object to be measured without moving masks.

In order to achieve this object, there is provided a microscope spectrometer of the initially named kind and with the features of claim 1.

With the above described characteristic construction, the beam from the sample is branched into two optical paths by means of the beam splitter and merely one of the branched optical paths is provided with the masks at the image plane, for example the focus thereof to make the positional relation of the portion to be measured in the whole sample clear by merely rejoining the light passing through both branched optical paths behind the masks without moving the masks. Subsequently, it is sufficient that the light from the portion to be measured required for the measurement is introduced into the spectrometric measurement system to conduct the analysis. Thus, the time required for the measurement can be remarkably shortened and the accuracy of measurement can be remarkably improved in comparison with those in the conventional microscopic spectrometer.

### BRIEF DESCRIPTION OF THE DRAWINGS

Preferred embodiments of the present invention are shown in the drawing, in which
- Fig. 1: is an optical arrangement plan for confirming the position of a portion to be measured;
- Fig. 2: is an optical arrangement plan for the infrared microscopic spectrometry;
- Fig. 3: is an optical arrangement plan for the visible microscopic spectrometry;
- Fig. 4: is a block diagram showing a conventional microscopic spectrometer; and
- Fig. 5: is a plan for describing a method of masking portions not to be measured by means of the masks.

### DESCRIPTION OF THE PREFERRED EMBODIMENTS

The preferred embodiments of the present invention are described below with reference to the drawings.

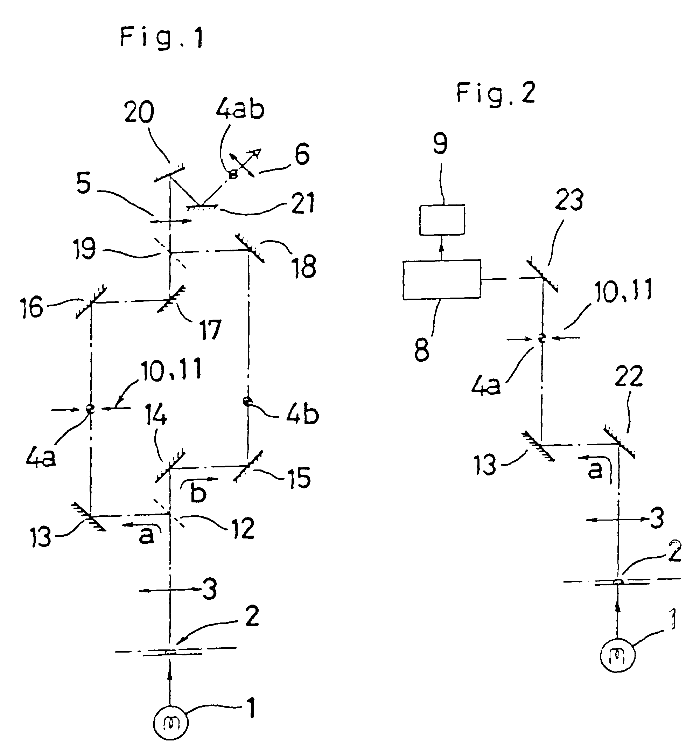

Figs. 1 and 2 show one example of the construction of the microscopic spectrometer according to the present invention and in these drawings same reference numerals as in Figs. 4 and 5 designate same or equivalent members.

At first, the light from a light source 1 (here visible light is emitted from the light source) is incident upon a sample 2. Further, the light transmitted through said sample 2 or the light, such as fluorescence and/or phosphorescence light, excited by the incident light is branched into two optical paths (a), (b) by means of a beam splitter 12 positioned behind an object lens 3. The light passing through the optical path (a) is reflected by a mirror 13 to be focused into an image at a focus 4a of said object lens 3. Masks 10, 11 are used for forming for example a rectangular slit and having respective sides which are constructed in a shape of knife edges. The length of the slit can be optionally charged by moving said masks 10, 11 which are disposed at said focus 4a for masking light from portions other than the portion to be measured so that merely the light from an object to be measured in the sample 2 may transmit through said masks 10, 11 [refer to Fig. 5(b), (c)]. In addition, also a circular pin hole may be used as masking means.

On the other hand, the light passing through the other optical path (b) branched by means of said beam splitter 12 is focused into an image at a focus 4b of the object lens 3 in the same manner as in said optical path (a) through mirrors 14, 15. However, masks 10, 11 and the like are not disposed at said focus 4b at all.

Subsequently, the light which has passed the masks 10, 11 disposed at the focus 4a in the optical path (a) is reflected by means of mirrors 16, 17, whereas the light which has passed through the focus 4b in the optical path (b) is reflected by means of a mirror 18 to be incident upon a beam splitter 19 and reflected by means of mirrors 20, 21 after passing a relay lens 5. Subsequently, the light being focused into an image at a focus 4ab as a synthetic image of the image at the focus 4a and the image at the focus 4b.

Accordingly, in the case where this focus 4ab is observed through an eyepiece 6, a portion to be measured, which is not masked by means of the masks 10, 11 exhibits a brightness higher than that of portions masked by means of the masks 10, 11 on account of the synthesis of the image at the focus 4a and the image at the focus 4b, whereby confirming the position of the masks 10, 11 set in the sample 2. Moreover, since also images of portions other than the object to be measured can be confirmed, the positional relation of the object to be measured in the sample 2 can be made clear.

Color filters having different spectrometric characteristics are introduced into both optical paths (a), (b) branched by means of the beam splitter 12 in order to make the portion to be measured still more clear. Therefore, the portion masked becomes different from the portions, which are not masked, in color and thus the difference between the portion masked and the portions, which are not masked, becomes still more clear.

In order to confirm the position of the portion to be measured by the above described method and to measure the spectrometric characteristics and intensity of the portion to be measured by the use of infrared rays subsequently, a total reflection mirror 22 is disposed in place of the beam splitter 12, as shown in Fig. 2.

That is to say, an infrared ray emitted from the light source 1 is incident upon the sample 2 and the light, which has transmitted through the sample 2, is reflected into the optical path (a) by means of said total reflection mirror 22 after having passed the object lens 3 to be focused into an image at the focus 4a of the object lens 3. (In addition, this infrarared ray may be a beam subjected to the energy intensity modulation at every wavelength by means of a two beam interference spectrometer or a beam which is not subjected to the modulation.)

Since the masks 10, 11 are previously disposed at the focus 4a by the use of the visible light so as to transmit merely the beam from the portion to be measured, infrared rays from the portions other than the portion to be measured can be masked. Subsequently, a total reflection mirror 23 is disposed behind the focus 4a or the mirror 16 in Fig. 1 is removed to introduce the infrared ray from the portion to be measured into the spectrometric measurement system 8. At this time, in case the infrared ray incident upon the sample 2 has not been modulated, a spectrum is obtained by means of a spectrometer within the spectrometric measurement system 8 and displayed by means of a display 9. In addition, in case the infrared ray has been subjected to the energy modulation different in frequency at every wavelength by means of the two beam interference spectrometer, the infrared ray from the portion to be measured is directly detected by means of a detector and subjected to the frequency analysis to obtain the spectrum.

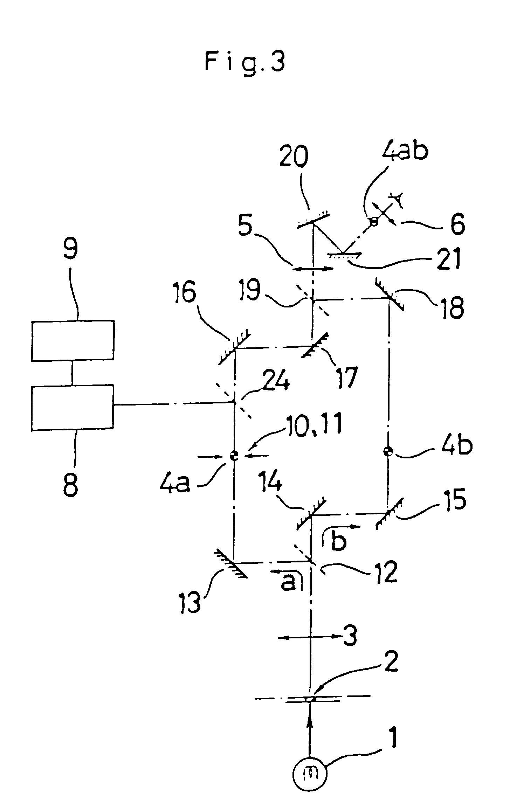

Fig. 3 shows another preferred embodiment of the present invention in which the light source 1 used in the measurement emits visible light. In the same optical arrangement as in Fig. 1, the light from a portion to be measured can be introduced into a spectrometric measurement system 8 in order to obtain a spectrum by merely disposing a beam splitter 24 between the focus 4a of the optical path (a) and the mirror 16. Also in the case of visible light, either a beam subjected to the modulation or a beam, which has not been subjected to the modulation, may be used in the same manner as in the above described case of an infrared ray.

In addition, in the measurement of the fluorescence or the phosphorescence from said portion to be measured by the visible light, the above described optical system can be applied but a beam having a constant intensity is used as said light source 1.

Although a transmission type microscopic spectrometer has been described in the above preferred embodiment, it goes without saying that the present invention can be applied also to a reflection type microscopic spectrometer.

As above described, according to the present invention, since the position of the portion to be measured in the sample can be confirmed without moving the masks, the time required for the measurement can be shortened and thus a remarkably highly accurate measurement can be achieved.

## Claims

1. A microscopic spectrometer, in which
- light from a light source (1) is incident upon a sample (2),
- the light which has been reflected by or transmitted through said sample (2) is subjected to a spectrometric measurement after having passed an object lens (3) and a diaphragm (10, 11) at an image plane (4a) thereof,
characterised in that
- a first beam splitter (12) is disposed behind said object lens (3) to form two branched optical paths (a, b),
- said diaphragm (10, 11) is disposed in only one (a) of said optical paths (a, b),
- means (16 - 19) for rejoining the light passing along said two branched optical paths (a, b) is positioned behind the respective image planes (4a, 4b) of said paths (a, b) for guiding the light of the branched optical paths (a, b) into a common path in order to observe an image obtained by synthesizing images at the respective image planes (4a, 4b) , and
- colour filters having different spectrometric characteristics are provided in each of said branched optical paths (a, b) so that the portion masked by said diaphragm (10, 11) and the portion which are not masked by said diaphragm (10, 11) have different colours.

2. The microscopic spectrometer as claimed in claim 1, **characterized in that** the diaphragm comprises several masks (10, 11) to be shifted against each other in order to establish a slit having a desired length and width.

3. The microscopic spectrometer as claimed in claim 1 or 2, **characterized in that** the means (16 - 19) for rejoining the light comprises a second beam splitter (19).

4. The microscopic spectrometer as claimed in one of the claims 1 to 3, **characterized in that** a total reflection mirror (22) for measurement on infrared rays is arranged to replace said first beam splitter (12).

5. The microscopic spectrometer as claimed in one of the claims 1 to 4, **characterized in that** means for guiding the light into a spectrometric measurement system (8) is provided between said diaphragm (10, 11) and said beam mixer (19).

6. The microscopic spectrometer as claimed in claims 4 and 5, **characterized in that** said guiding means is a total reflection mirror (23) for guiding the infrared rays into said spectrometric measurement system (8).

7. The microscopic spectrometer as claimed in claims 1 to 3 and 5, **characterized in that** said guiding means is a beam splitter (24).

## Patentansprüche

1. Mikroskopisches Spektrometer, in dem
- Licht von einer Lichtquelle (1) auf eine Probe (2) fällt,
- das Licht, das an der Probe (2) reflektiert wurde und durch diese hindurchgestrahlt wurde, einer spektrometrischen Messung unterzogen wird, nachdem es durch eine Objektivlinse (3) und eine Blende (10, 11) in der Bildebene (4a) derselben gelaufen ist,
**dadurch gekennzeichnet**, daß
- ein erster Strahlteiler (12) hinter der Objektivlinse (3) angeordnet ist, um zwei optische Zweigpfade (a, b) zu erzeugen,
- die Blende (10, 11) in nur einem (a) der optischen Pfade (a, b) angeordnet ist,
- eine Einrichtung (16 - 19) zum Vereinigen des entlang der zwei optischen Zweigpfade (a, b) laufenden Lichts hinter den jeweiligen Bildebenen (4a, 4b) der Pfade (a, b) angeordnet ist, um das Licht der optischen Zweigpfade (a, b) auf einen gemeinsamen Pfad zu lenken, um ein Bild zu betrachten, das durch Zusammensetzen der Bilder in den jeweiligen Bildebenen (4a, 4b) erhalten wurde, und
- Farbfilter mit verschiedenen spektrometrischen Eigenschaften in jedem der optischen Zweigpfade (a, b) angeordnet sind, so daß der durch die Blende (10, 11) maskierte Abschnitt und der nicht durch die Blende (10, 11) maskierte Abschnitt verschiedene Farben aufweisen.

2. Mikroskopisches Spektrometer nach Anspruch 1, **dadurch gekennzeichnet**, daß die Blende mehrere Masken (10, 11) aufweist, die gegeneinander verschoben werden können, um einen Schlitz mit gewünschter Länge und Breite einzustellen.

3. Mikroskopisches Spektrometer nach einem der Ansprüche 1 oder 2, **dadurch gekennzeichnet, daß** die Einrichtung (16 - 19) zum Wiedervereinigen des Lichts einen zweiten Strahlteiler (19) aufweist.

4. Mikroskopisches Spektrometer nach einem der Ansprüche 1 bis 3, **dadurch gekennzeichnet**, daß ein totalreflektierender Spiegel (22) zur Messung von Infrarotstrahlung so angeordnet wird, daß er den ersten Strahlteiler (12) ersetzt.

5. Mikroskopisches Spektrometer nach einem der Ansprüche 1 bis 4, **dadurch gekennzeichnet**, daß eine Einrichtung zum Führen des Lichts in ein spektrometrisches Meßsystem (8) zwischen der Blende (10, 11) und dem Strahlmischer (19) vorhanden ist.

6. Mikroskopisches Spektrometer nach den Ansprüchen 4 und 5, **dadurch gekennzeichnet, daß** die Führungseinrichtung ein totalreflektierender Spiegel (23) ist, um die Infrarotstrahlung in das spektrometrische Meßsystem (8) zu führen.

7. Mikroskopisches Spektrometer nach einem der Ansprüche 1 bis 3 und 5, **dadurch gekennzeichnet, daß** die Führungseinrichtung ein Strahlteiler (24) ist.

## Revendications

1. Un microscope spectrométrique, dans lequel:
- une source lumineuse (1) émet une lumière incidente vers un échantillon (2),
- la lumière réfléchie ou transmise par ledit échantillon (2) est soumise à une mesure spectrométrique après passage au travers d'une lentille objet d'objectif (3) et d'un diaphragme (10, 11) dans son plan image (4a),
caractérisé en ce qu'il comporte:
- un premier diviseur (12) de faisceau disposé derrière ladite lentille d'objectif (3) pour former deux chemins optiques ramifiés (a, b),
- ce diaphragme (10, 11) uniquement disposé sur un seul (a) desdits chemins optiques (a, b),
- des moyens (16-19) pour réunir la lumière des deux chemins optiques (a, b) précités, disposés derrière les plans images (4a, 4b) respectifs des deux chemins (a, b) et des moyens pour amener la lumière des deux chemins (a, b) optiques distincts à former un chemin commun pour observer une image obtenue par synthèse des images produites dans les plans images (4a, 4b) respectivement, et
- des filtres couleur ayant différentes caractéristiques spectrométriques disposés sur chacun desdits chemins optiques distincts (a, b), de sorte que la partie masquée par ledit diaphragme (10, 11) et la partie qui n'est pas masquée par ledit diaphragme (10, 11) présentent des couleurs différentes .

2. Le microscope spectrométrique tel que revendiqué dans la revendication 1, caractérisé en ce que le diaphragme comprend plusieurs masques (10, 11) susceptibles d'être déplacés les uns par rapport aux autres afin de constituer une fente présentant la largeur et la longueur désirées.

3. Le microscope spectrométrique tel que revendiqué dans la revendication 1 ou 2, caractérisé en ce que les moyens (16, 19) pour réunir la lumière comprend un second diviseur (19) de faisceau.

4. Le microscope spectrométrique tel que revendiqué dans l'une quelconque des revendications 1 à 3, caractérisé en ce qu'un miroir de réflexion totale (22) pour la mesure de rayons infrarouge est disposé à la place dudit premier diviseur (22) de faisceau.

5. Le microscope spectrométrique tel que revendiqué dans l'une quelconque des revendications 1 à 4, caractérisé en ce que des moyens de guidage de la lumière vers un système de mesure spectrométrique (8) sont disposés entre ledit diaphragme (10, 11) et ledit moyen de réunion (19) de faisceaux.

6. Le microscope spectrométrique tel que revendiqué dans les revendications 4 et 5, caractérisé en ce que lesdits moyens de guidage sont formés d'un miroir de réflexion totale (23) pour guider les rayons infrarouges dans le système de mesure spectrométrique (8).

7. Le microscope spectrométrique tel que revendiqué dans les revendications 1 à 3, caractérisé en ce que les moyens de guidage consistent en un diviseur de faisceau (24).
